# EUROPÄISCHE PATENTSCHRIFT

(11) **EP 2 186 639 B1**
(45) Veröffentlichungstag und Bekanntmachung des Hinweises auf die Patenterteilung: **02.01.2013**
(21) Anmeldenummer: 09013902.3
(22) Anmeldetag: 05.11.2009
(51) Int. Cl.: B41F 33/00, B65H 26/00

(54) **Verfahren und Vorrichtung zum Überprüfen eines Druckbildes auf einer laufenden Materialbahn**
Method and device for checking a printed image on a moving material web
Procédé et dispositif de vérification d'une image d'impression sur une bande de matériau déroulante

(30) Priorität: 18.11.2008 DE 102008057891
(43) Veröffentlichungstag der Anmeldung: 19.05.2010
(73) Patentinhaber: BST International GmbH, 33739 Bielefeld (DE)
(72) Erfinder: Wiebe, Michael, 33818 Leopoldshöhe (DE)
(74) Vertreter: Klingseisen, Franz

(56) Entgegenhaltungen:
- EP-A2- 1 958 773

## Beschreibung

Aus EP 1 958 773 A2 ist ein Verfahren zum Überprüfen eines Druckbildes auf einer laufenden Materialbahn mittels einer elektronischen Kamera bekannt, wobei das von der Kamera aufgenommene Bild auf einem Monitor wiedergegeben und mit einem vorgegebenden und in einem Speicher abgespeicherten Übersichtsbild bzw. Sollbild verglichen wird Am Sollbild wird ein zu überprüfender Teilbereich mittels einer elektronischen Steuereinrichtung ausgewählt und durch Koppelung mit einer mit der Kamera verbundenen elektronischen Steuereinheit zugleich die Kamera in die entsprechende Position über dem realen Druckbild verfahren. Der ausgewählte Teilbereich am Sollbild wird durch eine Vergrößerungseinrichtung für die vorzunehmende Überprüfung vergrößert und durch Koppelung mit dem Zoom der Kamera zugleich der Zoom der Kamera entsprechend verstellt, sodass bei der folgenden Aufnahme des realen Druckbildes durch die Kamera der Teilbereich des Druckbildes in der gleichen Vergrößerung am Monitor wiedergegeben wird wie sie zuvor am Sollbild eingestellt wurde.

Bei diesem bekannten Verfahren ist für das Verschieben der Kamera zu dem ausgewählten Teilbereich über dem realen Druckbild und für die Einstellung des Zooms der Kamera eine gewisse Zeit erforderlich. Wenn beispielsweise bei einer etwa zwei Meter breiten Materialbahn ein Teilbereich des sich über die Breite der Materialbahn erstreckenden Druckbildes auf der rechten Seite überprüft werden soll, wird die Kamera auf diesen Teilbereich eingestellt. Wenn dann ein Teilbereich auf der linken Seite des Druckbildes überprüft werden soll, muss die Kamera über die zwei Meter breite Materialbahn verfahren bzw. verschoben werden, wozu eine gewisse Zeit benötigt wird. Die beiden Aufnahmen auf der rechten und linken Seite der Druckbahn können somit erst in einem entsprechenden Zeitabstand zur Überprüfung bereitgestellt werden.

Der Erfindung liegt die Aufgabe zugrunde, ein Verfahren und eine Vorrichtung dieser Art so auszubilden, dass die Überprüfung eines Teilbereichs eines Druckbildes schneller vorgenommen werden kann.

Diese Aufgabe wird durch die Merkmale im Anspruch 1 gelöst. Dadurch, dass das gesamte von der Kamera aufgenommene Druckbild in einem Speicher bereitgehalten wird und Abschnitte bzw. Teilbereiche des so gespeicherten Druckbildes dauernd durch die Kamera erneuert werden, sodass das im Speicher abgelegte gesamte Druckbild dem realen Druckbild auf der laufenden Materialbahn sehr nahe kommt, kann an dem im Speicher abgelegten Druckbild ein Teilbereich ausgewählt und überprüft werden, ohne dass dazu das Verschieben der Kamera zu dem ausgewählten Teilbereich abgewartet werden muss. Durch die laufende, abschnittsweise Erneuerung des im Speicher abgelegten gesamten Druckbildes ergibt sich für jeden Teilbereich, der im Speicher ausgewählt wird, eine weitgehend aktuelle Wiedergabe des realen Druckbildes.

Die Erfindung wird beispielsweise anhand der Zeichnung näher erläutert. Es zeigen
- Fig. 1: ein schematisches Blockschaltbild einer Vorrichtung zur Durchführung des Verfahrens,
- Fig. 2: schematisch ein Übersichtsbild und ein reales Druckbild,
- Fig. 3: ein Übersichtsbild mit einem vergrößerten, ausgewählten Bereich, und
- Fig. 4: schematisch die Aufnahme von Teilbereichen eines Druckbildes durch die Kamera.

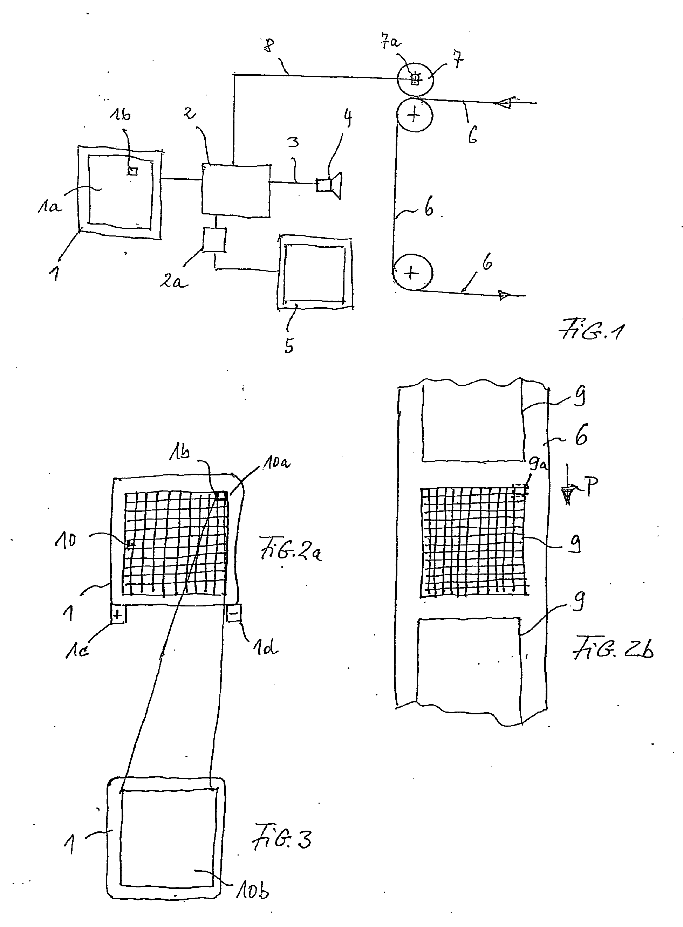

In Fig. 1 ist mit 1 ein Monitor bezeichnet, der ein Übersichtsbild bzw. ein Sollbild 10 (Fig. 2a) des auf der Materialbahn 6 aufgedruckten Druckbildes 9 wiedergibt, das z. B. den gesamten Bildschirm 1a des Monitors 1 einnimmt, wobei auf dem Bildschirm 1a mittels eines Cursors 1b ein Teilbereich des Sollbildes ausgewählt werden kann. Mit 2 ist eine mit dem Monitor 1 verbundene Steuer- und Recheneinheit bezeichnet, die über eine Leitung 3 eine Videokamera 4 für einen Flächenbereich des Druckbildes oder eine Zeilenkamera 4 steuert, die über oder vor einer laufenden Materialbahn 6 angeordnet ist, um Aufnahmen des Druckbildes 9 (Fig. 2b) zu machen, das durch einen Druckzylinder 7 der Druckmaschine auf der Bahn 6 aufgedruckt worden ist. Am Druckzylinder 7 können Sensoren wie z. B. ein Drehimpulsgeber 7a vorgesehen sein, die über eine Leitung 8 Signale an die Steuer- und Recheneinheit 2 bezüglich Laufgeschwindigkeit der Materialbahn 6 geben.

Fig. 2a zeigt schematisch ein virtuelles, bei diesem Beispiel eine Gitterstruktur wiedergebendes Sollbild 10, das auf dem Monitor 1 oder einem Touch Screen wiedergegeben wird und dem realen Druckbild 9 auf der bedruckten Materialbahn 6 entspricht.

Das Sollbild 10 auf dem Monitor 1 zeigt ein hoch aufgelöstes virtuelles Abbild des Druckbildes 9. Dieses virtuelle Sollbild 10 kann auf verschiedene Weise erhalten werden, beispielsweise als Pdf oder Bitmap der Druckvorstufe (Designbereich) der nicht dargestellten Druckmaschine. Das Bild kann aber auch durch eine beliebige Kamera bereitgestellt werden.

Fig. 2b zeigt schematisch das reale Druckbild 9 auf der bedruckten Materialbahn 6, wobei auf der Bahn 6 nacheinander Druckbilder 9 durch den Druckzylinder 7 aufgedruckt werden. Durch einen Pfeil P ist die Bewegungsrichtung der Materialbahn 6 angedeutet.

Durch eine nicht dargestellte Steuereinrichtung, beispielsweise eine Maus, kann der Cursor 1b zu einen bestimmten Teilbereich des Sollbildes 10 navigiert werden, der auf seine Druckqualität hin überprüft werden soll. Bei dem Ausführungsbeispiel nach Fig. 2a ist der Cursor 1b beispielsweise in die rechte obere Ecke 10a des Sollbildes 10 verschoben, die dem durch gestrichelte Linien bei 9a in Fig. 2b wiedergegeben Teilbereich des realen Druckbildes 9 entspricht.

Die Steuer- und Recheneinheit 2 umfasst einen Speicher 2a, in dem das durch die Kamera 4 abschnittsweise bzw. in Teilbereichen aufgenommene gesamte Druckbild 9 abgespeichert wird. Die Kamera 4 kann auf einer nicht dargestellten Verfahreinrichtung quer zur laufenden Materialbahn 6 verfahren werden, weil die Bahnbreite häufig größer ist als das Blickfeld der Kamera, sodass durch fortlaufende abschnittsweise Aufnahmen des Druckbildes 9 durch die Kamera 4 das im Speicher 2a abgelegte gesamte Druckbild 9 entsprechend abschnittsweise laufend erneuert wird. Das im Speicher 2ä abgelegte Druckbild 9 ist somit aus einzelnen Abschnitten bzw. Teilbereichen zusammengesetzt, die durch die Kamera 4 laufend erneuert werden.

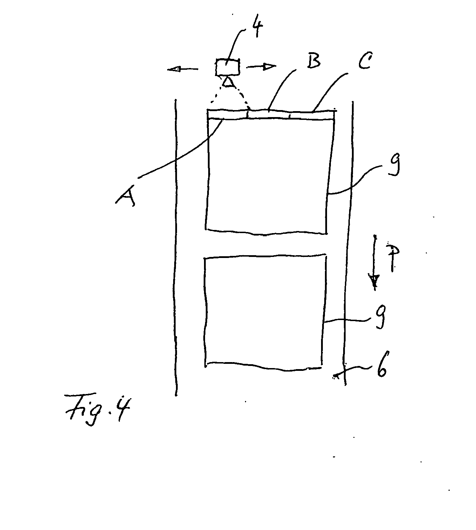

Fig. 4 zeigt schematisch eine über die Breite der Materialbahn 6 durch einen nicht dargestellten Antriebsmotor, beispielsweise einen Elektromotor, verschiebbare Kamera 4, die durch den Antriebsmotor quer zur Materialbahn 6 hin- und herbewegt werden kann, wie durch Pfeile angedeutet. Wenn die Kamera 4 als Videokamera ausgebildet ist, wird bei einer Aufnahme ein Teilbereich A des Druckbildes 9 aufgenommen, der einem vorgegebenen Flächenbereich entspricht. Nach Aufnahme des Teilbereichs A wird die Kamera 4 nach rechts verschoben, worauf ein Teilbereich B und danach ein Teilbereich C aufgenommen wird. Bei der Rückwärtsbewegung der Kamera von rechts nach links wird erneut ein Teilbereich C, dann ein Teilbereich B und ein Teilbereich A aufgenommen, wobei sich in der Zwischenzeit die Materialbahn 6 bereits in Richtung des Pfeils P bewegt hat, sodass der zuletzt aufgenommene Teilbereich C nicht mehr mit dem vorher aufgenommenen Teilbereich C übereinstimmt. Auf diese Weise wird im Speicher 2a das aus den Abschnitten bzw. Teilbereichen A, B und C zusammengesetzte, gesamte Druckbild 9 fortlaufend abschnittsweise erneuert.

Wenn die Kamera 4 als Zeilenkamera ausgebildet ist, entspricht ein Teilbereich A einem Abschnitt einer Zeile des Druckbildes 9, die aus den Teilabschnitten A, B und C besteht.

Der Monitor 1 mit der Wiedergabe des virtuellen Sollbildes 10 ist über die Steuer- und Recheneinheit 2 mit dem Speicher 2a in der Weise verbunden, dass ein am Sollbild 10 ausgewählter Teilbereich, wie er in Fig. 2a rechts oben wiedergegeben ist, aus dem im Speicher abgelegten, von der Kamera 4 laufend abschnittsweise durch die Abschnitte A, B und C erneuerten Gesamtbild z. B. auf einem Monitor 5 wiedergegeben wird, damit eine Qualitätsüberprüfung im Verhältnis zu der Vorgabe auf dem virtuellen Sollbild 10 vorgenommen werden kann. Wenn anschließend auf der linken Seite des beispielsweise zwei Meter breiten realen Druckbildes 9 ein Teilbereich des Druckbildes überprüft werden soll, wird mittels des Cursors 1b am Monitor 1 ein Teilbereich auf der linken Seite in Fig. 2a ausgewählt, der über die Steuer- und Recheneinheit 2 an dem Monitor 5 in der Form eines entsprechenden Teilbereichs des im Speicher 2a abgelegten Gesamtbildes wiedergegeben wird. Dieser Wechsel von der rechten Seite des Druckbildes in Fig. 2a auf die linke Seite des Druckbildes kann durch Verschieben des Cursors 1b sehr schnell vorgenommen werden. Entsprechend schnell erfolgt die Wiedergabe des ausgewählten Teilbereichs auf der linken Seite des Druckbildes im Monitor 5, wobei das am Monitor 5 wiedergegebene Bild dem Teilbereich des im Speicher 2a abgelegten Gesamtbildes entspricht.

Während dieses Auswahlvorganges von der rechten auf die linke Seite im Sollbild 10 (Fig. 2a) kann sich die Kamera 4 in einem ganz anderen Bereich des realen Druckbildes, beispielsweise in der untersten Zeile von links nach rechts bewegen; um die unteren Teilbereiche des realen Druckbildes 9 im Speicher 2a zu erneuern. Mit anderen Worten wird die Bewegung der Kamera 4 völlig unabhängig gesteuert von dem Auswahlvorgang der Teilbereiche am Sollbild 10, weil diese Teilbereiche zur Qualitätsüberprüfung aus dem Speicher 2a übernommen werden, in dem das gesamte Druckbild laufend abschnittsweise erneuert wird. Damit kann die Überprüfung der Druckqualität sehr schnell vorgenommen werden. Auch wenn der aus dem Speicher 2a wiedergegebene bzw. abgerufene Teilbereich auf dem Monitor 5 nicht zeitgleich den entsprechenden realen Teilbereich am Druckbild 9 wiedergibt, so steht doch durch die laufende abschnittsweise durch die Abschnitte A, B und C usw. vorgenommene Erneuerung des Druckbildes im Speicher 2a für die Qualitätsüberprüfung eine weitgehend aktuelle Abbildung des realen Druckbildes 9 aus dem Speicher zur Verfügung.

Das im Speicher 2a abgelegte Gesamtbild des Druckbildes 9 kann digital gezoomt und in jeder Weise bearbeitet werden, ohne dass dazu die Kamera 4 bewegt werden müsste. Somit kann am Monitor 5 sehr schnell jedes Detail des Druckbildes 9 wiedergegeben werden.

Vorzugsweise wird eine CCD- oder CMOS-Kamera 4 verwendet, die nur Abschnitte A, B, C usw. des realen Druckbildes 9 aufnimmt. Es ist zwar möglich, eine Kamera 4 zu verwenden, die das gesamte reale Druckbild 9 aufnimmt, aber bei einer solchen Kamera ist die Auflösung des Druckbildes relativ schwach. Durch Aufnahme von einzelnen Abschnitten wie A, B, C des Druckbildes 9 kann eine entsprechend hohe Auflösung erreicht werden.

Vorzugsweise wird eine Zeilenkamera verwendet, die eine eindimensionale Aufnahme in Strichform ergibt. Hierdurch werden beleuchtungstechnische Vorteile erzielt. Während bei Verwendung einer Flächenkamera bei Totalreflexion am realen Druckbild 9 die Flächenkamera schräg gestellt werden muss, um auf den betreffenden Abschnitt des Druckbildes 9 fokussiert zu werden, kann eine Zeilenkamera beliebig geschwenkt werden, ohne dass sich ein Fokussierproblem ergibt.

Bei Verwendung einer Zeilenkamera wird bei einem realen Druckbild 9 von beispielsweise 1000 x 1000 Pixel nur ein Abschnitt von z. B. 100 Pixel aufgenommen, wobei über die Dreh- .. zahl des Druckzylinders 7 100 x 1000 Pixel aufgenommen werden können, wenn die Druckbahn vor der feststehenden Kamera 4 abläuft. Demgegenüber würde bei einer Flächenkamera (Matrixkamera) bei einem solchen Druckbild von 1000 x 1000 Pixel ein Abschnitt A von z. B. 100 x 100 Pixel aufgenommen.

Mittels einer Zeilenkamera 4 ist in der Praxis eine abschnittsweise Bilderneuerung des im Speicher 2a abgelegten gesamten Druckbildes innerhalb von wenigen Sekunden, abhängig von der Drehzahl des Druckzylinders 7, möglich.

Hierdurch ist es einem Maschinenführer möglich, in kurzer Zeit exakt den Bereich eines Druckbildes zu überprüfen, den er für eine Überprüfung der Druckqualität ausgewählt hat, wobei eine Verstellung der Position der Kamera 4 oder des Zooms der Kamera nicht erforderlich ist.

Der Maschinenführer kann allein durch eine elektronische Steuereinrichtung wie beispielsweise eine Maus einen beliebigen Bereich des Druckbildes im Speicher 2a auswählen und diesen nach Bedarf vergrößern, während die Kamera 4 andere Bereiche des realen Druckbildes 9 aufnimmt und diese Bereiche im Speicher 2a erneuert.

Der durch den Cursor 1b in Fig. 2a ausgewählte Bereich des Sollbildes 10 kann durch einen Vergrößerungsschalter 1c auf die gewünschte Vergrößerung eingestellt werden, die für die Überprüfung der Druckqualität als zweckmäßig erscheint. Bei dem in Fig. 3 wiedergegebenen Ausführungsbeispiel wird der am Sollbild 10 durch den Cursor 1b ausgewählte Teilbereich derart vergrößert, dass er den gesamten Bildschirm des Monitors 1 einnimmt, wobei diese vergrößerte Darstellung in Fig. 3 mit 10b bezeichnet ist. Als Beispiel kann das Sollbild 10 in Fig. 2a ein herzustellendes Druckbild eines Briefmarkenblocks darstellen, wobei der Briefmarkenblock z. B. 50 Briefmarken in der Breite und 50 Briefmarken in der Länge des realen Druckbildes 9 umfasst. Der durch den Cursor 1b ausgewählte Bereich in Fig. 2a umfasst beispielsweise eine einzelne Briefmarke bei 10a in der rechten oberen Ecke des Sollbildes 10, wobei durch den Vergrößerungsschalter 1c eine Vergrößerung dieser einzelnen Briefmarke derart ausgeführt wird, dass sie den gesamten Bereich des Bildschirms 1a einnimmt, wie dies Fig. 3 bei 10b zeigt. Da diese Vergrößerung an einem Teilbereich des im Speicher 2a abgelegten Druckbildes vorgenommen wird, bleibt bei diesem Vergrößerungsvorgang die Kamera 4 unbeeinflusst.

Zweckmäßigerweise wird auch ein Verkleinerungsschalter 1d zur Verkleinerung des ausgewählten Bereichs 10b am Monitor 1 vorgesehen, damit beispielsweise aus einer zu starken Vergrößerung auf einen geringeren Grad der Vergrößerung am Sollbild 10 zurückgefahren werden kann.

Anstelle eines Verkleinerungsschalters 1d kann auch ein Schalt- bzw. Druckknopf vorgesehen werden, mittels dem die gewählte Vergrößerung auf das ursprüngliche Sollbild 10 (Fig. 2a) zurückgefahren wird, das keine Vergrößerung wiedergibt, worauf ausgehend von dem eine vollständige Übersicht wiedergegebenen Sollbild 10 eine Vergrößerung eines bestimmten Bereichs vorgenommen werden kann.

Anstelle zweier Monitore 1 und 5 kann auch nur ein einzelner Monitor vorgesehen werden, an dem das virtuelle Sollbild 10 und durch Umschalten auf die Aufnahme des realen Druckbildes 9 die Abbildung aus dem Speicher 2a wiedergegeben werden kann. Es kann auch der Bildschirm des einzelnen Monitors so aufgeteilt werden, dass das Sollbild 10 neben dem aus dem Speicher ausgewählten Bereich des Druckbildes gleichzeitig auf dem Bildschirm wiedergegeben wird.

Bei Verwendung der in Fig. 1 schematisch wiedergegebenen Vorrichtung kann das im Speicher 2a abgelegte und dauernd abschnittsweise erneuerte Druckbild auch auf dem Monitor 1 in einer Gesamtansicht wiedergegeben werden, wobei dieses Gesamtbild am Monitor 1 als Navigationshilfe für die Auswahl eines Teilbereiches bei 1b dient, der dann in hoher Auflösung auf dem Monitor 5 wiedergegeben wird, auf dem der Maschinenführer die Druckqualität überprüft, ohne einen Vergleich mit einem virtuellen Sollbild 10 vorzunehmen.

Bei dem erfindungsgemäßen Verfahren wird zum Überprüfen eines Druckbildes 9 auf einer laufenden Materialbahn 6 mittels einer Kamera 4 das von der Kamera aufgenommene Druckbild auf einem Monitor 1, 5 wiedergegeben und ein zu überprüfender Teilbereich 1b des Druckbildes mittels einer elektronischen Steuereinrichtung an einem virtuellen Sollbild 10 oder an dem von der Kamera 4 aufgenommenen Druckbild ausgewählt, wobei das von der Kamera 4 aufgenommene reale Druckbild 9 in dem Speicher 2a abgespeichert und abschnittsweise fortlaufend erneuert wird, während am Monitor 5 ein ausgewählter Teilbereich 1b des im Speicher 2a gespeicherten Druckbildes zur Überprüfung wiedergebbar ist, unabhängig von der Aufnahme von Teilbereichen A, B, C durch die Kamera 4 und unabhängig von der laufenden abschnittsweisen Erneuerung des gespeicherten Druckbildes.

## Patentansprüche

1. Verfahren zum Überprüfen eines Druckbildes (9) auf einer laufenden Materialbahn (6) mittels einer über das auf der materialbahn aufgedruckte druckbild beweglichen Kamera (4),
umfassend die Schritte:
Speichern des von der Kamera aufgenommenen Druckbildes (9) in einem Speicher (2a), und
Wiedergeben des gespeicherten Druckbildes auf einem Monitor (1, 5), **gekennzeichnet dadurch, dass** die Kamera fortlaufend Abschnitte oder Teilbereiche (A, B, C) des Druckbildes (9) aufnimmt und das im Speicher (2a) gespeicherte Druckbild fortlaufend abschnittsweise durch die von der Kamera aufgenommenen Teilbereiche erneuert wird,
dass am Monitor (5) das im Speicher (2a) gespeicherte und abschnittsweise erneuerte Druckbild zum Überprüfen wiedergegeben wird, und
dass unabhängig von der Bewegung der Kamera und unabhängig von der abschnittsweisen Erneuerung des gespeicherten Druckbildes das im Speicher (2a) gespeicherte Druckbild auf dem Monitor wiedergegeben wird.

2. Verfahren nach Anspruch 1,
wobei ein zu überprüfender Teilbereich (1b) des im Speicher (2a) gespeicherten Druckbildes mittels einer elektronischen Steuereinrichtung am Monitor ausgewählt und der ausgewählte Teilbereich des gespeicherten Druckbildes am Monitor wiedergegeben wird, unabhängig von der durch die Kamera (4) fortlaufend abschnittsweisen Erneuerung des gespeicherten Druckbildes.

3. Verfahren nach Anspruch 1 oder 2, wobei ein Monitor (1) für die Wiedergabe eines virtuellen Sollbildes (10) und ein Monitor (5) für die Wiedergabe der Aufnahme des realen Druckbildes (9) durch die Kamera (4) aus dem Speicher (2a) verwendet wird.

4. Verfahren nach Anspruch 1 oder 2, wobei ein einzelner Monitor für die Wiedergabe eines Sollbildes (10) und für die Wiedergabe der Aufnahme des realen Druckbildes (9) durch die Kamera (4) verwendet wird.

5. Vorrichtung zum Überprüfen eines Druckbildes (9), das auf einer laufenden Materialbahn (6) aufgedruckt ist, umfassend
eine Kamera (4) zum Aufnehmen des Druckbildes (9),
wenigstens einen Monitor (1, 5) zur Wiedergabe des von der Kamera aufgenommenen Druckbildes (9),
eine Steuer- und Recheneinheit (2) zum Steuern der Bewegung den Kamera (4) über das auf der Materialbahn (6) aufgedruckte Druckbild (9), und
einen Speicher (2a) zum Speichern des von der Kamera (4) aufgenommenen Druckbildes (9), **gekennzeichnet dadurch, dass**
die Kamera (4) nur Teilbereiche (A, B, C) des Druckbildes (9) aufnimmt, und die Steuer- und Recheneinheit (2) im Speicher (2a) entsprechende Teilbereiche des gespeicherten Druckbildes fortlaufend durch die neu aufgenommenen Teilbereiche (A, B, C) ersetzt, und
dass unabhängig von der Bewegung der Kamera und unabhängig von der abschnittsweisen Erneuerung des gespeicherten Druckbildes das im Speicher (2a) gespeicherte Druckbild auf dem Monitor wiedergebbar ist.

6. Vorrichtung nach Anspruch 5, wobei die Kamera als Zeilenkamera (4) ausgebildet ist.

7. Vorrichtung nach Anspruch 6 wobei die Zeilenkamera (4) quer zur laufenden Materialbahn (6) verfahrbar ist.

## Claims

1. A method for monitoring a printed image (9) on a moving material web (6) by means of a camera (4) which is movable over the printed image printed on the material web, comprising the steps of:
storing the printed image (9) recorded by the camera in a memory (2a), and
reproducing the stored printed image on a monitor (1, 5),
**characterised in that**
the camera continuously records sections or partial areas (A, B, C) of the printed image (9), and the printed image stored in the memory (2a) is continuously renewed section-wise with the partial areas recorded by the camera,
the section-wise renewed printed image stored in the memory (2a) is reproduced at the monitor (5) for monitoring, and
independently of the movement of the camera and independently of the section-wise renewing of the stored printed image, the printed image stored in the memory (2a) is reproduced at the monitor.

2. Method according to claim 1,
wherein a partial area (1b) of the printed image stored in the memory (2a), which partial area is to be monitored, is selected by means of an electronic control means at the monitor, and the selected partial area of the stored printed image is reproduced at the monitor independently of the on-going section-wise renewal of the stored printed image by the camera (4).

3. Method according to claim 1 or 2, wherein a monitor (1) is used for displaying a virtual target image (10) and a monitor (5) is used for displaying the recording of the real printed image (9) by the camera (4) from the memory (2a).

4. Method according to claim 1 or 2, wherein a single monitor (1) is used for displaying a target image (10) and for displaying the recording of the real printed image (9) by the camera (4).

5. Device for monitoring a printed image (9) printed onto a moving material web (6), comprising
a camera (4) for recording the printed image (9),
at least one monitor (1, 5) for reproducing the printed image (9) recorded by the camera,
a control and calculation unit (2) for controlling the movement of the camera (4) over the printed image (9) printed on the material web (6), and
a memory (2a) for storing the printed image (9) recorded by the camera (4),
**characterised in that**
the camera (4) records only partial areas (A, B, C) of the printed image (9), and the control and calculation unit (2) replaces partial areas of the stored printed image continuously in the memory (2a) with the corresponding newly recorded partial areas (A, B, C), and
independently of the movement of the camera and independently of the section-wise renewal of the stored printed image, the printed image stored in the memory (2a) is reproducible on the monitor.

6. Device according to claim 5, wherein the camera used is a line scan camera (4)

7. Device according to claim 6, wherein the line scan camera (4) is movable transverse to the moving material web (6)

## Revendications

1. Dispositif de vérification d'une image d'impression (9) sur une bande de matériau (6) déroulante au moyen d'une caméra (4) pouvant être déplacée sur l'image d'impression imprimée sur la bande de matériau,
comportant les étapes consistant à :
mémoriser l'image d'impression (9) prise par la caméra dans une mémoire (2a), et restituer sur un moniteur (1, 5) l'image d'impression mémorisée,
**caractérisé en ce que** la caméra prend en continu des sections ou des zones partielles (A, B, C) de l'image d'impression (9) et l'image d'impression mémorisée dans la mémoire (2a) est renouvelée en continu par endroits par les zones partielles prises par la caméra,
**en ce que** l'image d'impression mémorisée dans la mémoire (2a) et renouvelée par endroits est restituée aux fins de la vérification sur le moniteur (5),
et **en ce que** l'image d'impression mémorisée dans la mémoire (2a) est restituée sur le moniteur en fonction du déplacement de la caméra et en fonction du renouvellement par endroits de l'image d'impression mémorisée.

2. Procédé selon la revendication 1,
dans lequel une zone partielle (1b) à vérifier de l'image d'impression mémorisée dans la mémoire (2a) est sélectionnée au moyen d'un dispositif de commande électronique sur le moniteur, et la zone partielle sélectionnée de l'image d'impression mémorisée est restituée sur le moniteur en fonction du renouvellement en continu par endroits par la caméra (4) de l'image d'impression mémorisée

3. Procédé selon la revendication 1 ou 2, dans lequel un moniteur (1) est utilisé pour restituer une image de consigne (10) virtuelle, et en ce qu'un moniteur (5) est utilisé pour restituer la prise de vue de l'image d'impression (9) réelle par la caméra (4) à partir de la mémoire (2a).

4. Procédé selon la revendication 1 ou 2, dans lequel un moniteur unique est utilisé pour la restitution d'une image de consigne (10) et pour la restitution de la prise de vue de l'image d'impression (9) réelle par la caméra (4).

5. Dispositif de vérification d'une image d'impression (9), qui est imprimée sur une bande de matériau (6) déroulante, comprenant
une caméra (4) servant à effectuer une prise de vue de l'image d'impression (9),
au moins un moniteur (1, 5) servant à restituer l'image d'impression (9) prise par la caméra,
une unité de commande et de calcul (2) servant à commander le déplacement de la caméra (4) sur l'image d'impression (9) imprimée sur la bande de matériau (6), et une mémoire (2a) servant à mémoriser l'image d'impression (9) prise par la caméra (4),
**caractérisé en ce que** la caméra (4) ne prend que des zones partielles (A, B, C) de l'image d'impression (9) et l'unité de commande et de calcul (2) remplace en continu des zones partielles correspondantes dans la mémoire (2a) de l'image d'impression mémorisée par les zones partielles (A, B, C) récemment prises,
et **en ce qu'**en fonction du déplacement de la caméra et en fonction du renouvellement par endroits de l'image d'impression mémorisée, l'image d'impression mémorisée dans la mémoire (2a) peut être restituée sur le moniteur.

6. Dispositif selon la revendication 5, dans lequel la caméra est réalisée comme une caméra à lignes (4).

7. Dispositif selon la revendication 6, dans lequel la caméra à lignes (4) peut être déplacée de manière transversale par rapport à la bande de matériau déroulante (6)
